# EUROPEAN PATENT APPLICATION

(11) **EP 4 841 093 A2**
(43) Date of publication of application: **18.11.2026**
(21) Application number: 26174018.7
(22) Date of filing: 22.04.2026
(51) Int. Cl.: F02K 3/115, B64D 27/10, B64D 29/02, B64D 33/08, F02K 3/06, F28D 21/00

(54) **PROPULSION SYSTEM FOR AN AIRCRAFT COMPRISING A HEAT EXCHANGER ARRANGED IN A NACELLE**

(30) Priority: 15.05.2025 US 202563806424 P
(71) Applicant: Airbus Operations (S.A.S.), 31060 Toulouse Cedex 9 (FR)
(72) Inventor: SIBILLE, Benoit, 31000 TOULOUSE (FR); URIZ JAUREGUI, Fermin, 31000 TOULOUSE (FR); PUECH, Jacky, 31000 TOULOUSE (FR); THAUVIN, Jérôme, 31000 TOULOUSE (FR); DESCHAMPS, Matthieu, 31000 TOULOUSE (FR); PASNON, Quentin, 31000 TOULOUSE (FR); RAUHOFF, Sébastien, 31000 TOULOUSE (FR); DEFORET, Thomas, 31000 TOULOUSE (FR); STEVENS, Thomas, 31000 TOULOUSE (FR)
(74) Representative: Cabinet Le Guen Maillet

(57) **Abstract**

The invention concerns a propulsion system (100) of an aircraft comprising a fan (112), an inner casing (104), a fan casing (106), where the fan casing (106) comprises an inner surface (106a) and an outer surface (106b), a heat exchanger (110) of a first type arranged between the inner and the outer surfaces (106a-b), where said the heat exchanger (110) of the first type comprises a first inlet arranged in the inner surface (106a) and a first outlet arranged in the outer surface (106b), and/or at least one heat exchanger (120, 121) of a second type arranged in the outer surface (106b) of the fan casing (106) and in the inner casing (104), each extending on a bottom part of said outer surface (106b) or of said inner casing (104).

With this arrangement, the heat exchanger provides the required cooling capacity associated with larger engines, and has little-to-no impact on the aerodynamics.

## Description

### TECHNICAL FIELD

The invention relates to a propulsion system of an aircraft comprising a nacelle and a heat exchanger positioned in the nacelle. The invention relates to an aircraft comprising such propulsion system.

### PRIOR ART

An aircraft conventionally has a plurality of propulsion systems. Each propulsion system is generally secured underneath a wing of the aircraft and includes an engine and attachment means for securing the engine under the wing. As is known, the aircraft also has two wings, one on each side of a fuselage, with pylons for each engine. Surrounding the engines are nacelles and around the pylons are fairings. Recently, newer and larger engines are being proposed which have increased efficiency. Additionally, with these newer engines, new mounting systems including new pylons and/or fairing shapes, have been proposed. These new mounting systems have improved aerodynamics for the aircraft.

In view of these newer engines and new mounting systems, there is an ongoing need for new effective and efficient heat exchange systems which meet an increased cooling capacity needed with larger engines, and which do so without impacting the improved aerodynamics provided by the new mounting systems.

### SUMMARY OF THE INVENTION

An object of the present invention is to provide a propulsion system of an aircraft comprising a nacelle and a heat exchanger arranged in the nacelle.

To this end, is proposed a propulsion system of an aircraft, comprising:
- a core,
- a fan arranged forward the core,
- an inner casing around the core,
- a fan casing around the inner casing and the fan, where the fan casing comprises an inner surface and an outer surface,
- at least one heat exchanger of a first type arranged between the inner surface and the outer surface, where said at least one heat exchanger of the first type comprises a first inlet arranged in the inner surface and a first outlet arranged in the outer surface, and/or
- at least one heat exchanger of a second type comprising a first inlet and a first outlet arranged in the outer surface of the fan casing and at least one in the inner casing, each heat exchangers of the second type extending on a bottom part of said outer surface or of said inner casing.

With this arrangement, the heat exchanger provides the required cooling capacity associated with larger engines, and has little-to-no impact on the aerodynamics.

Advantageously, for each heat exchanger of the first type, the first inlet (110a) is arranged upstream with respect to the first outlet.

According to a specific embodiment, the propulsion system comprises guides vanes arranged inside the fan casing rearward the fan and each first inlet is arranged forward said guides vanes.

According to a specific embodiment, the propulsion system comprises guides vanes arranged inside the fan casing rearward the fan and each first inlet is arranged rearward said guides vanes.

Advantageously, the propulsion system comprises thrust reverser block doors each being movable between an open position and a closed position, and each first inlet is arranged upstream with respect to the doors when the doors are in the closed position.

According to a specific embodiment, the heat exchangers of the second type extend all the way around said outer surface or of said inner casing.

Advantageously, each heat exchanger of a second type is a skin heat exchanger.

The invention concerns also an aircraft comprising a propulsion system according to any one of the preceding embodiments.

### BRIEF DESCRIPTION OF THE DRAWINGS

The features of the invention mentioned hereinabove, and others will become more clearly apparent on reading the following description of one embodiment, said description being given with reference to the appended drawings, in which:
Fig. 1 is a side view of an aircraft including a propulsion system according to the invention,
Fig. 2 is a schematic representation in section by a vertical median plane of a propulsion system of the invention,
Fig. 3 is a schematic front view taken along line III-III in Fig. 2 of the propulsion system according to the invention,
Fig. 4 is a perspective view of a heat exchanger of a first type used in the propulsion system of the invention,
Fig. 5 is another perspective view of the same heat exchanger of the first type used in the propulsion system of the invention,
Fig. 6 is a side view of a heat exchanger of a second type used in the propulsion system of the invention,
Fig. 7 is a schematic front view taken along line VII-VII in Fig. 2 of the propulsion system according to the invention, and
Fig. 8 is a schematic front view taken along line VIII-VIII in Fig. 2 of the propulsion system according to the invention.

### DETAILED DESCRIPTION OF EMBODIMENTS

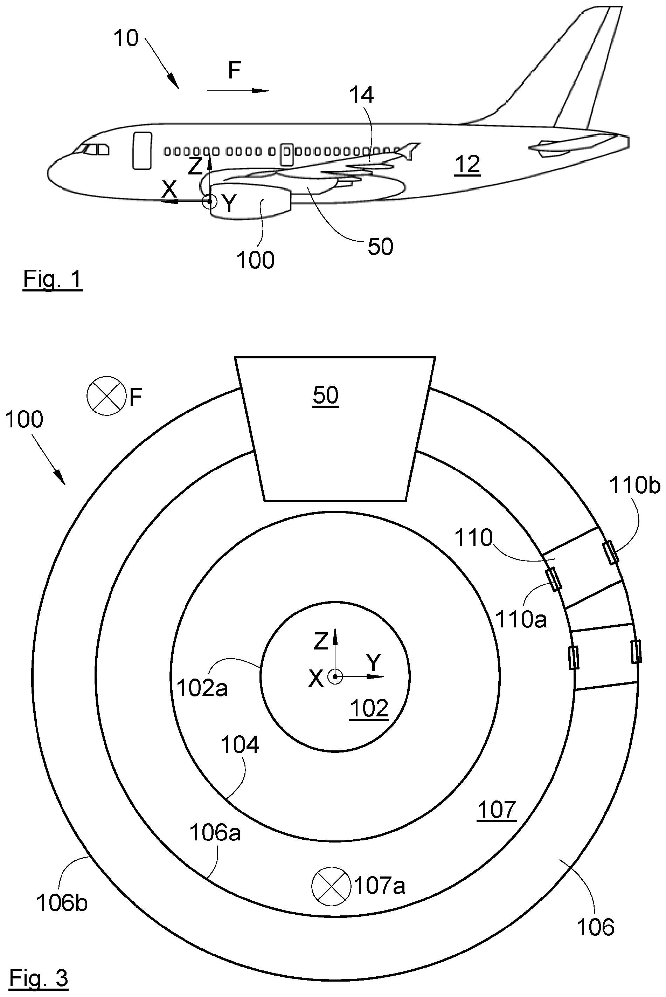

Fig. 1 shows an aircraft 10 which has a fuselage 12 on each side of which a wing 14 is attached. Under each wing 14 is fixed at least one propulsion system 100 according to the invention. Each propulsion system 100 is attached to the wing 14 thanks to a pylon 50.

The propulsion system 100 comprises an engine for example a turbojet engine comprising a fan. A fairing surrounds the pylon 50 and a nacelle surrounds the engine. The engine is for example a high ratio bypass engine.

In the following description, the terms relating to a position are taken in reference to an aircraft in the normal flight position, i.e. as shown in Fig. 1 and the "upstream" and "downstream" positions are taken in relation to the direction of air flow in the engine of the propulsion system 100 from the front to the rear of the propulsion system 100.

The arrow 'F' shows the direction of air flow, which is the opposite of the direction of travel of aircraft 10 when the engines are operating.

Throughout the following description, by convention, X refers to the longitudinal direction of the propulsion system 100 that is also considered to be the same as the longitudinal direction of the engine, this longitudinal direction X is parallel to a longitudinal axis of the aircraft 10. Furthermore, Y is the transverse direction to the propulsion system 100 and is horizontal when the aircraft 10 is on the ground, and Z is the vertical direction and is vertical when the aircraft 10 is on the ground, these three X, Y and Z directions being orthogonal to each other. Furthermore, the terms forward and aft or rear should be considered with respect to a direction of movement of the aircraft that occurs as a result of the thrust applied by the engine.

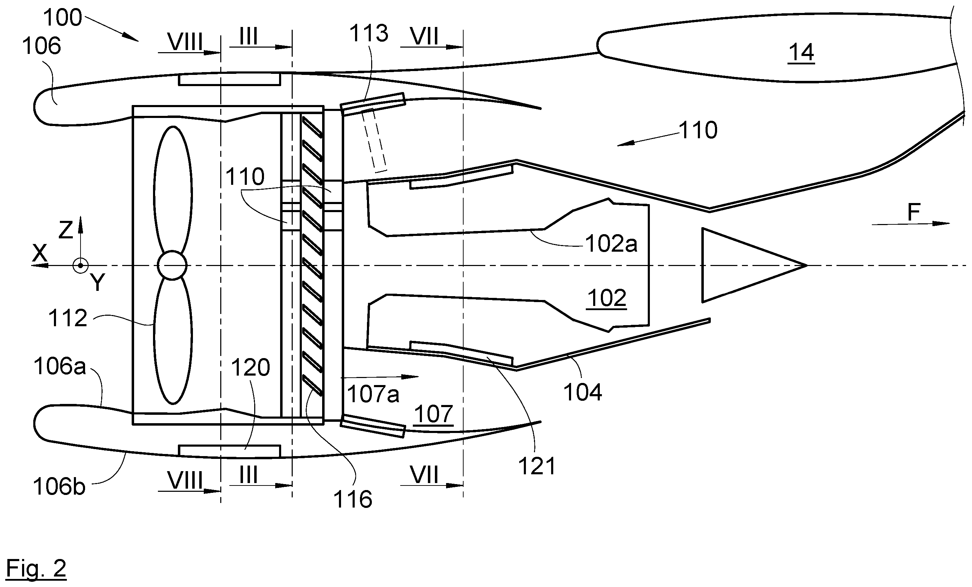

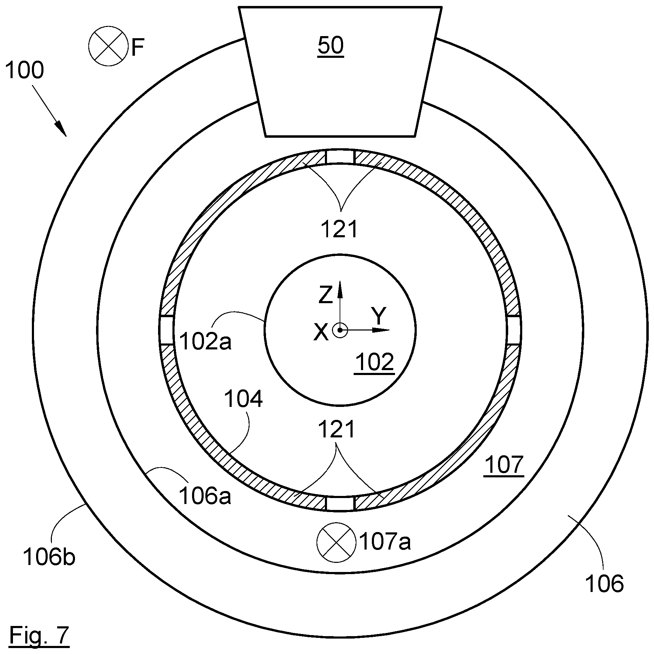

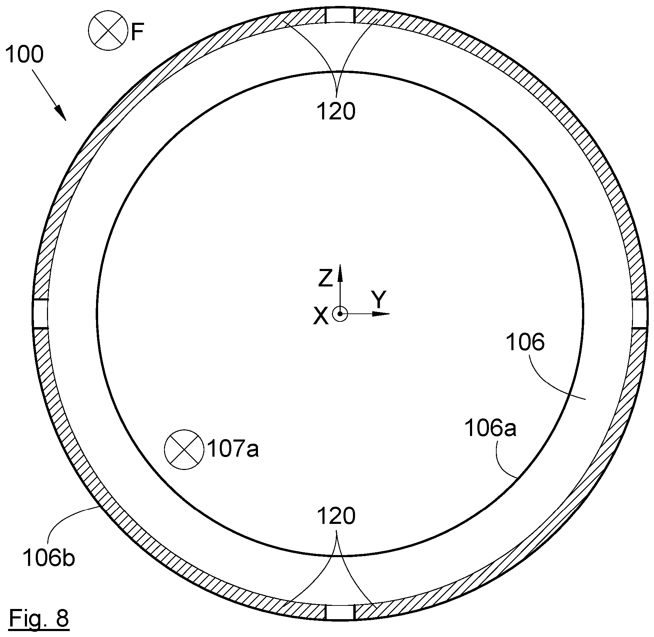

Fig. 2, Fig. 3 and Figs. 7 and 8 show the propulsion system 100 according to the invention.

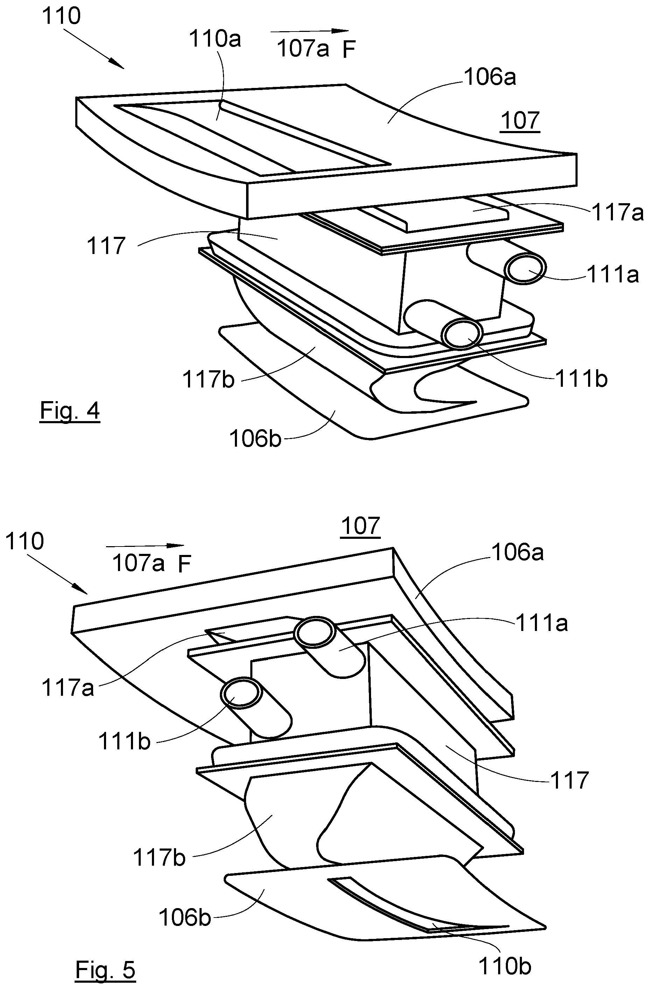

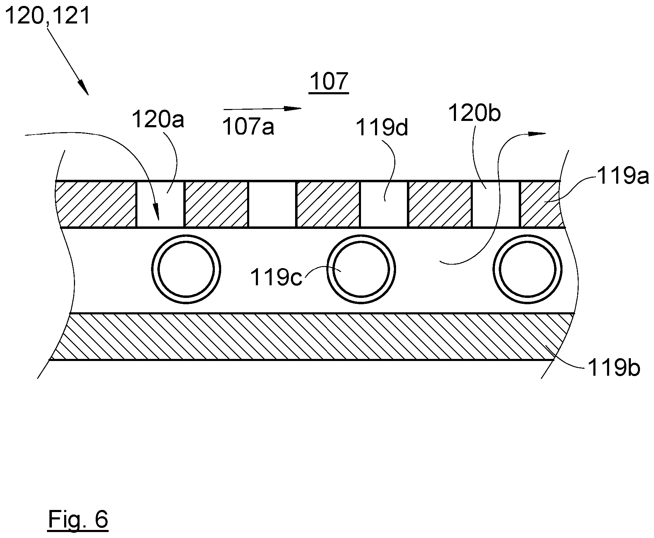

Fig. 4 and Fig. 5 show a heat exchanger 110 of a first type and Fig. 6 shows a heat exchanger 120 of a second type.

The propulsion system 100 comprises a core 102 containing the compression stages, combustion chamber and turbine stages of the engine. These elements are enclosed in a central fairing 102a of the core 102. The central fairing 102a takes the form of a surface of revolution around the longitudinal axis X.

Forward the central fairing 102a, the propulsion system 100 comprises a fan 112 driven in rotation by the core 102.

Around the central fairing 102a, the propulsion system 100 comprises an inner casing 104 coaxial with the central fairing 102a. The inner casing 104 is also called the inner fixed structure IFS.

Around the inner casing 104, the propulsion system 100 comprises a fan casing 106 extending forward of the inner casing 104 and surrounding the fan 112 of the engine installed upstream. The fan casing 106 delimits an air inlet through which the air flow enters the propulsion system 100, due to the fan 112.

A secondary channel 107 is delimited between the fan casing 106 and the inner casing 104. This secondary channel 107 guides a secondary flow 107a which flows from upstream to downstream as shown by the arrows 107a.

A primary channel is in the core 102 and guides a primary flow in the central fairing 102a. The fan casing 106 comprises an inner surface 106a and an outer surface 106b. The inner surface 106a is oriented toward the interior of the fan casing 106 and the secondary channel 107 and the outer surface 106b is oriented toward the exterior of the fan casing 106.

The nacelle comprises at least the inner casing 104 and the fan casing 106.

The propulsion system 100 comprises at least one heat exchanger 110 of a first type. The heat exchangers 110 of the first type are arranged between the inner surface 106a and the outer surface 106b of the fan casing. Each heat exchanger 110 of the first type comprises a first inlet 110a arranged in the inner surface 106a and a first outlet 110b arranged in the outer surface 106b. The heat exchangers 110 of the first type are disposed radially around the longitudinal axis X.

The first inlet 110a and the first outlet 110b of a heat exchanger 110 of the first type are fluidly connected to each other through said heat exchanger 110. Thus, a fluid enters through the first inlet 110a exits through the first outlet 110b through the heat exchanger 110 of the first type.

The first inlet 110a and the first outlet 110b are for example skin fan air valves arranged on the corresponding surface 106a-b. With this arrangement, the heat exchanger 110 of the first type is installed inside the fan casing 106, it means outside of the secondary channel 107 and it therefore does not hinder the flow of air in the secondary channel 107.

In addition to or instead of the heat exchangers 110 of the first type, the propulsion system 100 comprises at least one heat exchanger 120, 121 of a second type comprising a first inlet 120a and a first outlet 120b arranged in the outer surface 106b of the fan casing 106 and at least one in the inner casing 104, each heat exchangers 120, 121 of the second type extending on a bottom part of said outer surface 106b or of said inner casing 104.

In Figs, 7 and 8, the heat exchangers 120, 121 of a second type extends all the way around said outer surface 106b or of said inner casing 104, but according to the invention, the heat exchangers 120, 121 of the second type extend only on a bottom part of said outer surface 106b or of said inner casing 104. Especially, on the lower half of the outer surface 106b or of the inner casing 104.

With this arrangement, the heat exchangers 110 of the first type and/or the heat exchangers 120, 121 of a second type provide the required cooling capacity, and have little-to-no impact on the aerodynamics in the secondary channel 107.

A part of the air flowing in the secondary channel 107 enters in the heat exchanger 110 of the first type through the first inlet 110a and is ejected outside through the first outlet 110b.

Figs. 4 and 5 show the heat exchanger 110 of the first type which comprises also a second inlet 111a and a second outlet 111b fluidly connected to the second inlet 111a through the heat exchanger 110 of the first type. Thus, a fluid entering through the second inlet 111a exits through the second outlet 111b through the heat exchanger 110. When the two fluids intersect without mixing in the heat exchanger 110, the hotter one cools while the cooler one heats up. The heat exchanger 110 of the first type may be utilized to cool oil or to cool or heat any other fluid. The heat exchanger can also be used to regulate the air flow rate. The heat exchangers 110 of the first type reduce drag and provide for improved specific fuel consumption.

In the present embodiment, to ease the circulation of the air flow in the heat exchanger 110 of the first type, the first inlet 110a of said heat exchanger 110 is arranged upstream with respect to the first outlet 110b of the same heat exchanger 110 with regard of the flow direction of the secondary flow 107a. The first inlet 110a is then located closer to the fan 112 than the first outlet 110b and is configured to remove a portion of the secondary flow 107a.

In the present embodiment, the heat exchanger 110 of the first type comprises a heat exchanger chamber 117, a first channel 117a fluidly connected between the heat exchanger chamber 117 and the first inlet 110a and a second channel 117b fluidly connected between the heat exchanger chamber 117 and the first outlet 116.

To guide and regulate the secondary flow 107a, the propulsion system 100 comprises guides vanes 116 arranged inside the fan casing 106 in the secondary channel 107. The guides vanes 116 are disposed rearward the fan 112 and they can be adjustable, orientable in order to regulate the secondary flow 107a. They can be positioned on the fan casing 106b or just under the fan casing 106.

According to a specific embodiment, each first inlet 110a is arranged forward said guides vanes 116, it means between the fan 112 and the guides vanes 116.

According to another specific embodiment, each first inlet 110a is arranged rearward said guides vanes 116.

In the present embodiment, the propulsion system 100 comprises thrust reverser block doors 113 and each one is movable between an open position (in continuous lines) in which the door 113 is out of the secondary channel 107 and a closed or deployed (in dashed lines) position in which the door 113 is across the secondary channel 107 to divert the airflow of the secondary channel 107 and slow down the aircraft 10. Each door 113 is moved thanks to a mechanism not represented and comprising for example an actuator. The doors 113 are rearward the guides vanes 116.

Each first inlet 110a of the heat exchangers 110 of the first type is arranged upstream with respect to the doors 113 with regard of the flow direction of the secondary flow 107a when the doors 113 are in the closed position. With this arrangement, even if the thrust reverser blocker doors 113 are in the closed position, the air may still flow into the heat exchanger 110 of the first type.

Fig. 6 shows a heat exchanger 120, 121 of a second type. The heat exchanger 120, 121 of the second type is a skin heat exchanger. The heat exchanger 120, 121 of the second type comprises an outside plate 119a and a bottom plate 119b. The two plates 119a-b delimit between them a chamber in which tubes 119c are installed. A fluid flows in the tubes.

The outside plate 119a is pierced with holes 119d that allow a fluid to enter and exit from the chamber and the air flow is returned to the same flow. Each hole 119d can be either comprising a first inlet 120a or a first outlet 120b of the heat exchanger 120, 121 of the second type.

When the two fluids intersect without mixing in the chamber of the heat exchanger 120, 121 of the second type, the hotter one cools while the cooler one heats up.

The heat exchangers 120, 121 of the second type are disposed radially around the longitudinal axis X.

The heat exchanger 120, 121 of the second type may be utilized to cool oil or to cool or heat any other fluid.

For the heat exchanger 120 of the second type arranged in the fan casing 106, the first inlet 120a and the first outlet 120b are both arranged in the outer surface 106b of the fan casing 106.

In this embodiment, the outside plate 119a is the outer surface 106b, and the bottom plate 119b is a plate installed in the fan casing 106 between the inner surface 106a and the outer surface 106b.

In this embodiment, the air entering in the heat exchanger 120 of the second type through the holes 119d is the air external to the fan casing 106.

For the heat exchanger 121 of the second type arranged in the inner casing 104, the first inlet 120a and the first outlet 120b are both arranged in the inner casing 104.

In this embodiment, the outside plate 119a is the inner casing 104, and the bottom plate 119b is a plate installed under the inner casing 104.

In this embodiment, the air entering in the heat exchanger 121 of the second type through the holes 119d is the air of the secondary flow 107a.

As explained above, according to a specific embodiment, the heat exchangers 120, 121 of the second type extend all the way around said outer surface 106b or of said inner casing 104. The number of heat exchangers 110 of the first type and of heat exchangers 120, 121 of the second type used in the propulsion system 100 may vary as required to obtain the necessary thermal requirements.

## Claims

1. Propulsion system (100) of an aircraft (10), comprising:
- a core (102),
- a fan (112) arranged forward the core (102),
- an inner casing (104) around the core (102),
- a fan casing (106) around the inner casing (104) and the fan (112), where the fan casing (106) comprises an inner surface (106a) and an outer surface (106b),
- at least one heat exchanger (110) of a first type arranged between the inner surface (106a) and the outer surface (106b), where said at least one heat exchanger (110) of the first type comprises a first inlet (110a) arranged in the inner surface (106a) and a first outlet (110b) arranged in the outer surface (106b), and/or
- at least one heat exchanger (120, 121) of a second type comprising a first inlet (120a) and a first outlet (120b) arranged in the outer surface (106b) of the fan casing (106) and at least one in the inner casing (104), each heat exchangers (120, 121) of the second type extending on a bottom part of said outer surface (106b) or of said inner casing (104).

2. Propulsion system (100) according to claim 1, **characterized in that**, for each heat exchanger (110) of the first type, the first inlet (110a) is arranged upstream with respect to the first outlet (110b).

3. Propulsion system (100) according to any one of claims 1 or 2, **characterized in that** it comprises guides vanes (116) arranged inside the fan casing (106) rearward the fan (112) and **in that** each first inlet (110a) is arranged forward said guides vanes (116).

4. Propulsion system (100) according to any one of claims 1 or 2, **characterized in that** it comprises guides vanes (116) arranged inside the fan casing (106) rearward the fan (112) and **in that** each first inlet (110a) is arranged rearward said guides vanes (116).

5. Propulsion system (100) according to any one of claims 1 to 4, **characterized in that** it comprises thrust reverser block doors (113) each being movable between an open position in and a closed position, and **in that** each first inlet (110a) is arranged upstream with respect to the doors (113) when the doors (113) are in the closed position.

6. Propulsion system (100) according to any one of claims 1 to 5, **characterized in that** the heat exchangers (120, 121) of the second type extend all the way around said outer surface (106b) or of said inner casing (104).

7. Propulsion system (100) according to any one of claims 1 to 6, **characterized in that** each heat exchanger (120, 121) of a second type is a skin heat exchanger.

8. Aircraft (10) comprising a propulsion system (100) according to any one of the preceding claims.
